# EUROPEAN PATENT SPECIFICATION

(11) **EP 2 562 520 B1**
(45) Date of publication and mention of the grant of the patent: **29.05.2019**
(21) Application number: 11771704.1
(22) Date of filing: 15.03.2011
(51) Int. Cl.: G01J 3/51, G01J 3/02, G01J 3/50

(54) **OPTICAL SYSTEM FOR MEASUREMENTS, AND LUMINANCE COLORIMETER AND COLORIMETER USING SAME**
OPTISCHES SYSTEM FÜR MESSUNGEN SOWIE LEUCHTKRAFTKOLORIMETER UND KOLORIMETER DAMIT
SYSTÈME OPTIQUE POUR DES MESURES, ET COLORIMÈTRE DE LUMINANCE ET COLORIMÈTRE UTILISANT UN TEL SYSTÈME

(30) Priority: 23.04.2010 JP 2010099830
(43) Date of publication of application: 27.02.2013
(73) Proprietor: Konica Minolta Optics, Inc., Saka-shi, Osaka 590-8551 (JP)
(72) Inventor: TSURUTANI, Katsutoshi, Sakai-shi Osaka 590-8551 (JP)
(74) Representative: Hoffmann Eitle
(86) International application number: PCT/JP2011/001506
(87) International publication number: WO 2011/132360

(56) References cited:
- EP-A1- 1 498 708
- EP-A1- 2 570 785
- WO-A1-03/091676
- WO-A2-2009/013718
- JP-A- 6 273 232
- JP-A- 10 246 672
- JP-A- 2002 296 115
- JP-A- 2006 189 445
- JP-A- 2010 002 255
- US-A- 5 978 606
- US-A1- 2006 146 330

## Description

### Technical Field

The present invention relates to an optical system for measurements suitable for a luminance colorimeter that receives light emitted from a light source such as a liquid crystal monitor or a lamp and measures the luminance (Lv) or chromaticity (xy) of the light source, or a colorimeter that receives illumination light reflected from a measurement object and measures the reflectance or chromaticity (Lab and the like) of the measurement object, and to a luminance colorimeter and a colorimeter using such optical system for measurements.

### Background Art

A luminance colorimeter that measures a luminance (Lv) or chromaticity (xy) of a liquid crystal monitor is configured, for example, of a measuring probe disposed opposite a display screen of the liquid crystal monitor, and a measurement device body. The measuring probe measures with respective sensors, for example, tristimulus values of isochromatic functions X, Y, Z stipulated by the CIE (International Commission on Illumination), and the measurement body calculates the luminance and chromaticity of a display screen 3, which is a measurement object, from the measurement results.

The typical technique employed in the optical system for measurements used in such luminance colorimeter or colorimeter is described, for example, in Patent Document 1. In Patent Document 1, a bundle fiber is used that causes the incident light to fall on three colorimetric optical systems corresponding to the tristimulus values. The colorimetric optical systems are configured by combining light-receiving sensors with color filters corresponding to the tristimulus values, and the color filters of those colorimetric optical systems are disposed at the three branched outgoing ends of the bundle filter. The bundle fiber of Patent Document 1 is divided into six groups in the circumferential direction, as viewed from the incidence end where the bundle has a round shape, and the bundles positioned on the diagonals are bundled together. As a result, the measurement error caused by directivity (light distribution characteristic) is reduced.

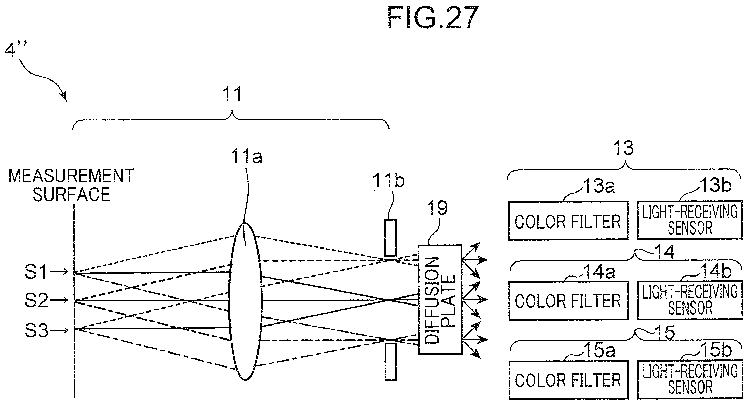

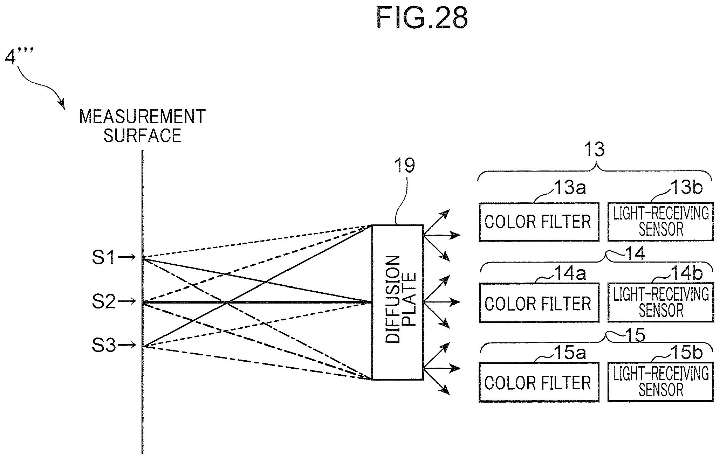

However, the bundle fiber is expensive and involves the measurement error caused by directivity (light distribution characteristic). Therefore, in another conventional technique, a diffusion plate 19 having a branching and diffusion function is used instead of the bundle fiber, as shown in a measuring probe 4" shown in Fig. 27. Alternatively, a luminous flux from the measurement object is directly made incident on the diffusion plate 19, without using an object optical system 11, as shown in the measuring probe 4"' illustrated by Fig. 28.

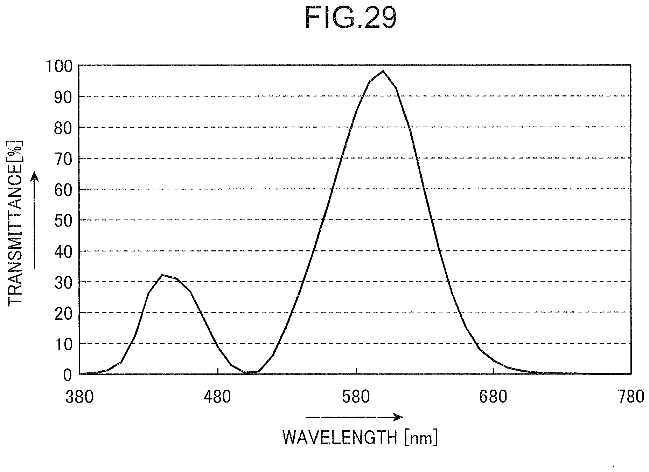

A color filter is configured by laminating a plurality of filters of a light absorption type so as to obtain the transmittance of incident light that corresponds to the desired spectral characteristic such as tristimulus values X, Y, Z. Therefore, a filter having transmittance peaks in two wavelength regions, for example such as shown in Fig. 29, cannot be designed, that is, the filter design has a small degree of freedom. Another problem is that the transmittance is small and the loss of quantity of light is large. Yet another problem is that the film-shaped color filter is rapidly degraded by heat, light (UV radiation), and moisture (poor stability).

Accordingly, for example, Patent Document 2 suggests a technique of using interference-type filters (referred to hereinbelow as interference filters) instead of the abovementioned filters of a light absorption type for the color filters. The interference filter is obtained by laminating several tens of layers of dielectrics or oxides by a suitable method such a vacuum vapor deposition or sputtering on a glass substrate. In such a filter, the transmission/reflection wavelength selection is performed by light interference.

However, the problem associated with the interference filter is that the transmittance differs depending on the angle of incidence, and therefore the error sensitivity is high when the incident light is a parallel beam (0 degrees).
Patent Document 1: Japanese Patent Application Publication No. 2003-247891
Patent Document 2: Japanese Patent Application Publication No. 2010-2255
Documents US 2006/0146330 A1 and WO 2009/013718 A2 disclose optical systems for colour measurements having a single diffusing element. Another example can be seen in document EP 1 498 708 A1 describing a small packaged spectroscopic sensor unit provided which measures or inspects an interior quality or ingredient of an inspection object by introducing light having passed through the interior of the inspection object to an optical fiber and analyzes the light spectroscopically. In this sensor unit, the fiber bundle receives only a light beam of incident angle less than a prescribed angle, the fiber bundle is twisted together to disperse and uniformize the irregularity of the introduced light at the light-emitting end, and the optical fiber bundle is held by an arranging holder to shape the light-emitting face of the fiber bundle to fit the light-receiving face of a light diffuser and the light-receiving face of a photoelectric conversion element. The sensor unit has a light diffuser for diffuse-transmitting the light emitted from the light-emitting face of the optical fiber bundle, a continuous variable interference filter placed on the light-emitting face of the light diffuser, and a photoelectric conversion element after the continuous variable interference filter. The optical paths of the optical fiber bundle, light diffuser, and the continuous variable interference filter are aligned to be connected. The above members are sealed airtightly in a package.

### Summary of the Invention

With the foregoing in view, it is an object of the present invention to provide an optical system for measurements that can reduce the effect of displacement of the transmission characteristic caused by the angle of incidence, while using the interference filters, and also a luminance colorimeter and a colorimeter using such optical system.

The optical system for measurements according to the invention is defined in claim 1. The luminance colorimeter and colorimeter according to the invention are defined in claims 7 and 8, respectively. In the optical system for measurements in accordance with the present invention and the luminance colorimeter and colorimeter using same, a measuring beam is diffused by a first diffusion member, and when received by a plurality of light-receiving sensors via a plurality of interference filters, the measuring beam is made incident on the interference filters via second diffusion members. Those interference filters are formed such that transmittance characteristics corresponding to a measurement parameter are obtained correspondingly to intensity distribution conditions for an angle of incidence of light incident on the interference filters. Therefore, the optical system for measurements in accordance with the present invention and the luminance colorimeter and colorimeter using same can reduce the effect of displacement of the transmission characteristic caused by the angle of incidence, while using the interference filters.

Other objects, features and merits of the present invention will become apparent from the following detailed description and appended drawings.

### Brief Description of the Drawings

Fig. 1 illustrates the internal configuration (optical system for measurements) of a measuring probe of the luminance colorimeter of one embodiment.
Fig. 2 illustrates the luminous flux incident on an interference filter in the case where the first diffusion plate is not used inside the measuring probe shown in Fig. 1.
Fig. 3 illustrates the luminous flux incident on an interference filter in the case where the second diffusion plate is used inside the measuring probe shown in Fig. 1.
Fig. 4 illustrates the positional relationship of the second diffusion plate and interference filter.
Fig. 5 illustrates a method for measuring the intensity distribution of a luminous flux incident on the interference filter in the measuring probe shown in Fig. 1.
Fig. 6 is a graph illustrating an example of intensity distribution of a luminous flux incident on the interference filter.
Fig. 7 is a graph illustrating a spectral intensity distribution of the interference filter.
Fig. 8 is a graph illustrating the distribution of the angle of incidence on the interference filter and the effect produced when the filter is inclined.
Fig. 9 is a graph illustrating the transmittance distribution in the case where the interference filter is disposed in the optical system with a distribution of angle of incidence shown in Fig. 8.
Fig. 10 is a graph illustrating the relationship between an angle of incidence on the interference filter and an error.
Fig. 11 illustrates another embodiment of the second diffusion plate in Fig. 1.
Fig. 12 illustrates yet another embodiment of the second diffusion plate in Fig. 1.
Fig. 13 illustrates the internal configuration of the measuring probe in the case where the second diffusion plate shown in Fig. 12 is used.
Fig. 14 illustrates the internal configuration of the measuring probe in the second embodiment.
Fig. 15 is a cross-sectional view illustrating how the light propagates inside an optical fiber.
Fig. 16 is a graph illustrating data obtained by the inventors in actual measurements of the outgoing angle of the optical fiber.
Fig. 17 illustrates how the data shown in Fig. 16 are obtained.
Fig. 18 illustrates a method for measuring the intensity distribution of the luminous flux incident on the interference filter in the measuring probe shown in Fig. 14.
Fig. 19 illustrates the internal configuration of the measuring probe in the third embodiment.
Fig. 20 Illustrates a method for measuring a liquid crystal monitor with a luminance colorimeter.
Fig. 21 is a block diagram illustrating the schematic configuration of a luminance colorimeter on the measuring probe side.
Fig. 22 is a block diagram illustrating the schematic configuration of a colorimeter on the measuring probe side.
Fig. 23 illustrates the internal configuration (optical system for measurements) of a measuring probe of the conventional luminance colorimeter.
Fig. 24 illustrates light distribution in the light crystal monitor.
Fig. 25 is a graph illustrating, as an example, light distribution in the light crystal monitor.
Fig. 26 illustrates the relationship between a measurement area and a RGB color pixel arrangement in the liquid crystal monitor.
Fig. 27 illustrates the internal configuration (optical system for measurements) of a measuring probe of another conventional luminance colorimeter.
Fig. 28 illustrates the internal configuration (optical system for measurements) of a measuring probe of yet another conventional luminance colorimeter.
Fig. 29 is a graph illustrating an example of spectral transmittance characteristic of an interference filter.
Fig. 30 is a graph illustrating the dependence of the spectral transmittance characteristic on variations in the angle of incidence on the interference filter.
Fig. 31 illustrates the internal configuration (optical system for measurements) of a measuring probe of yet another conventional luminance colorimeter.

### DESCRIPTION OF EMBODIMENTS

An embodiment of the present invention will be described below with reference to the drawings. In the drawings, like components are assigned with like reference numerals and the explanation thereof is omitted as appropriate. Further, in the present description, when a general term is used, a reference symbol with omitted index is used, and when an individual component is indicated, a reference symbol with an index is used.

### (Comparative Example)

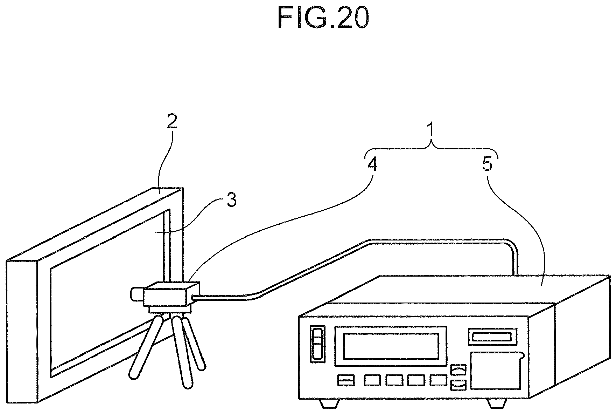

In order to illustrate the operation effect of the present embodiment, first, a comparative example will be described below. Fig. 20 illustrates how the luminance (Lv) and chromaticity (xy) of a liquid crystal monitor 2 are measured using a luminance colorimeter 1. The luminance colorimeter 1 is provided with a measuring probe 4, which is disposed opposite a display screen 3 of the liquid crystal monitor 2, and a measurement device body 5. The measuring probe 4 measures with respective sensors, for example, the tristimulus values isochromatic functions X, Y, Z stipulated by the CIE, and the measurement device body 5 calculates the luminance and chromaticity of the display screen 3, which is the measurement object, from the measurement results.

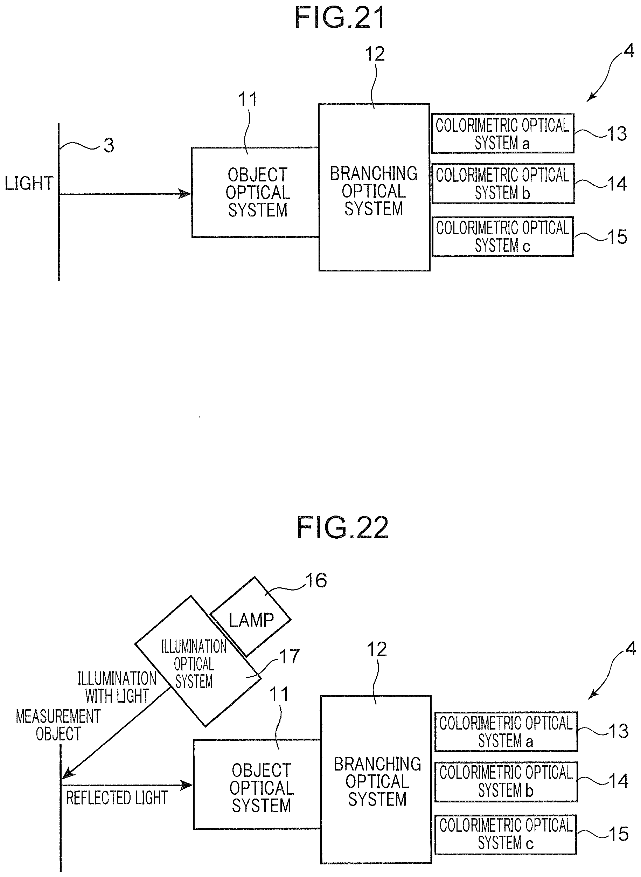

The schematic configuration of the measuring probe 4 is, for example, such as shown in Fig. 21. Thus, in the measuring probe 4, the outgoing light from the display screen 3, which is the measurement object, is received by an object optical system 11, a component within an angle of ±2.5 degrees with respect to a predetermined component of the angle of incidence, for example, a normal to the display screen 3, is extracted, made incident on a branching optical system 12, and branched into three beams that are made incident on colorimetric optical systems 13, 14, 15 corresponding to tristimulus values of isochromatic functions X, Y, Z, and the intensity of incident light is measured.

Meanwhile, in the case of a colorimeter that measures the reflectance or chromaticity (Lab and the like) of the measurement objet, for example, as shown in Fig. 22, a lamp 16, which is a light source, and an illumination optical system 17 are provided in addition to the configuration of the measuring probe 4 shown in Fig. 21. With those lamp 16 and illumination optical system 17, the measured object is illuminated with light, and the light reflected thereby is measured with the measuring probe 4.

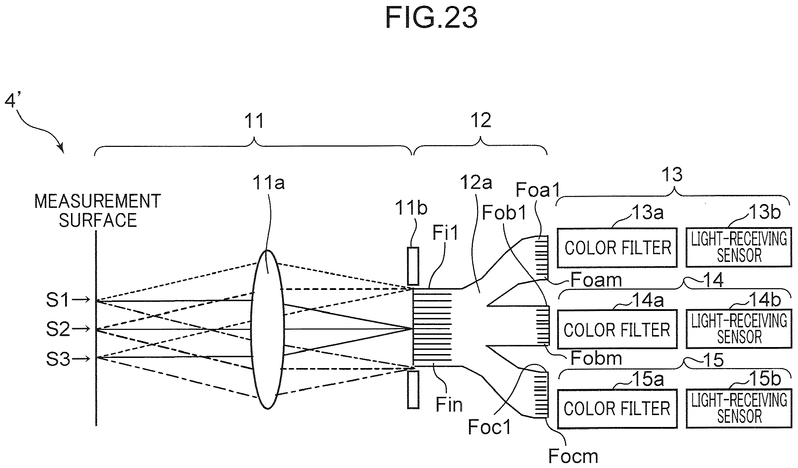

The typical technique employed in the optical system for measurements used in such luminance colorimeter or colorimeter is described in Patent Document 1. Fig. 23 illustrates the internal configuration of a measuring probe 4' used in such technique. In this technique, the measuring probe 4' is provided with the object optical system 11, the branching optical system 12, and a colorimetric optical system 13. A convex lens 11a with a positive power is used in the object optical system 11, and a bundle fiber 12a is used in the branching optical system 12. In the bundle fiber 12a, a plurality n (n = several hundred to several thousands) of fiber strands (fiber elements) with a small diameter (diameter is about 0.03 mm to 0.3 mm) is bundled at the incidence end (inlet) side, and at the outgoing end (outlet) side, those fibers are randomly branched into a plurality of bundles (for example, three bundles correspond to the aforementioned tristimulus values X, Y, Z) each bundle including a plurality m of fiber strands. The incident side and outgoing side may have any shape (round, rectangular, and the like).

Further, in the measuring probe 4', an aperture stop 11b is arranged at a rear focus position of the convex lens 11a and a front telecentric optical arrangement is used to take in the components within an angle of ±2.5 degrees with respect to the normal to the display screen 3, as described hereinabove. Incidence ends Fi1 to Fin of the bundle fiber 12a are close to the face of the aperture stop 11b. The colorimetric optical systems 13, 14, 15 are provided with color filters 13a, 14a, 15a corresponding to tristimulus values X, Y, Z, respectively, and light-receiving sensors 13b, 14b, 15b that are used in combinations therewith.

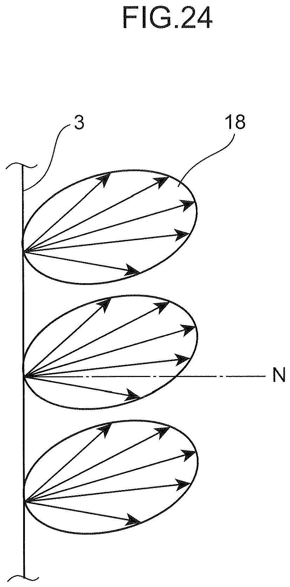

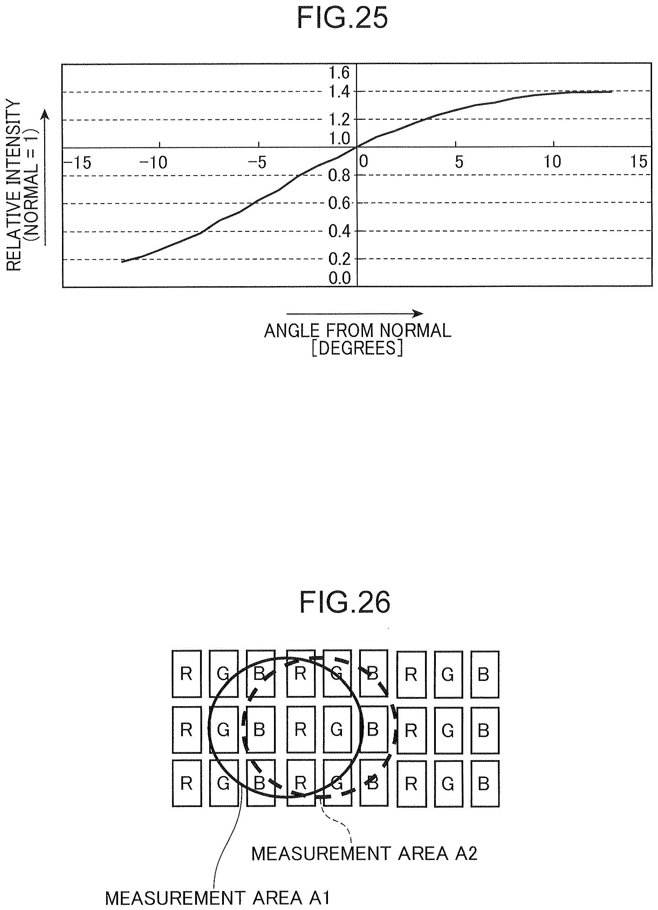

As for the characteristics of the measurement object, for example, when a liquid crystal monitor is considered, the light distribution thereof has directivity. Thus, the intensity of outgoing light differs depending on the angle with respect to the normal to the display screen 3. Furthermore, in some cases, the intensity of outgoing light is asymmetrical with respect to the normal. For example, in the monitors of notebook computers and cellular phones, the directivity is intentionally increased. In the monitors of notebook computers, the user often looks obliquely down from above. Therefore, as shown in Fig. 24, in a light distribution 18, the quantity of light is large above and small below the normal N to the display screen 3. A specific example of such light distribution is shown in Fig. 25.

In the case of the aforementioned liquid crystal monitor, the intensity of emitted light differs depending on the measurement position (intensity unevenness occurs). This phenomenon occurs due to a positional relationship between a backlight and/or an array of RGB filters, and the measuring probe 4. Fig. 26 shows the relationship between the measurement area and the pixel arrangement of RGB colors in a liquid crystal monitor. For example, where the attention is focused on the central row, the measurement area A1 represented by a solid line includes two G pixels, one R pixel and one B pixel, whereas a measurement area A2 represented by a broken line, which is shifted by one pixel in the pixel arrangement direction from the measurement area A1, includes two B pixels, one R pixel and one G pixel. Such intensity unevenness is significant when the measurement area is small (for example, the diameter is equal to or less than 5 mm).

Furthermore, although the measurement object (liquid crystal monitor) has an axially asymmetric feature, stable measurement results are required from the measurement device. Thus, it is necessary that the measurement results do no change even when the measuring probe 4 is rotated about the optical axis (no rotation error). This phenomenon is not limited to liquid crystal monitors and also occurs in colorimeters that measure reflected light, for example, in measurements conducted on glossy printed matter and metallic or pearl coating surfaces.

Accordingly, in the configuration described in Patent Document 1, in the bundle fiber 12a, a plurality of fiber strands is divided into six groups in the circumferential direction, as viewed from the incidence ends Fi1 to Fin that are circularly bundled, and the bundles positioned on the diagonals are bundled together. As a result, the measurement error caused by the above-described directivity (light distribution characteristic) is reduced.

However, the bundle fiber 12a is expensive and involves the measurement error caused by directivity (light distribution characteristic) such as mentioned hereinabove. Therefore, in another conventional technique, a diffusion plate 19 having a branching and diffusion function is used instead of the bundle fiber 12a, as shown in the measuring probe 4" shown in Fig. 27. Alternatively, a luminous flux from the measurement object is directly introduced into the diffusion plate 19, without using the object optical system 11, as shown in the measuring probe 4"' illustrated by Fig. 28.

The color filters 13a, 14a, 15a are configured by laminating a plurality of filters of a optical absorption type so as to obtain the transmittance of incident light that corresponds to the desired spectral characteristic such as tristimulus values X, Y, Z. Therefore, this configuration has a problem that it is unable to design a filter having two transmittance peaks in respective wavelength bands, as illustrated, for example, in FIG. 29, in other words, flexibility of filter design is limited. Another problem is that the transmittance is small and the loss of quantity of light is large. Yet another problem is that the film-shaped color filter is rapidly degraded by heat, light (ultraviolet light), and moisture (poor stability).

Accordingly, for example, Patent Document 2 suggests a technique of using interference-type filters (referred to hereinbelow as interference filters) instead of the abovementioned filters of a optical absorption type for the color filters 13a, 14a, 15a. The interference filter is obtained by laminating several tens of layers of dielectrics or oxides by a suitable method such as vacuum vapor deposition or sputtering on a glass substrate. In such a filter, transmission/reflection wavelength selection is performed by the action of optical interference . Therefore, with the interference filter the desired transmittance can be obtained easier (can be easy designed and the degree of freedom in design is high) than with the above-described filter of a optical absorption type, and a filter having two peaks (shown in Fig. 21), e.g., a color matching function, can be also fabricated. Further, the interference filter has a high transmittance. For example, the peak transmittance in the absorption-type filter is equal to or less than 50%, whereas in the interference filter it is close to 100%. Yet another advantage of the interference filter is excellent reliability (small variations in transmittance with time caused by temperature, moisture, or exposure to light).

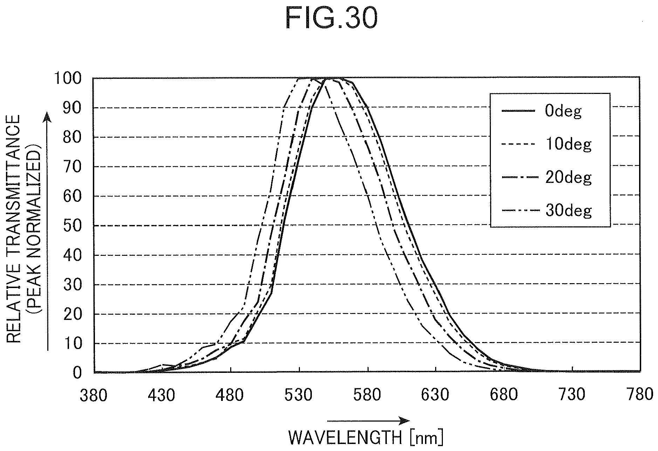

Meanwhile, in the interference filter, the transmittance differs depending on the angle of incidence and therefore a problem associated with the interference filter is that a sensitivity error is high when a parallel beam (0 degrees) is made incident. Fig. 30 shows the relationship between the angle of incidence of light on the interference filter and the transmittance. Thus, in the case of 0-degree incidence, the transmission region shifts to the short wavelength side as the angle of incidence shifts from the normal to the interference filter. Therefore, the transmission characteristic changes when parts are even slightly inclined to each other.

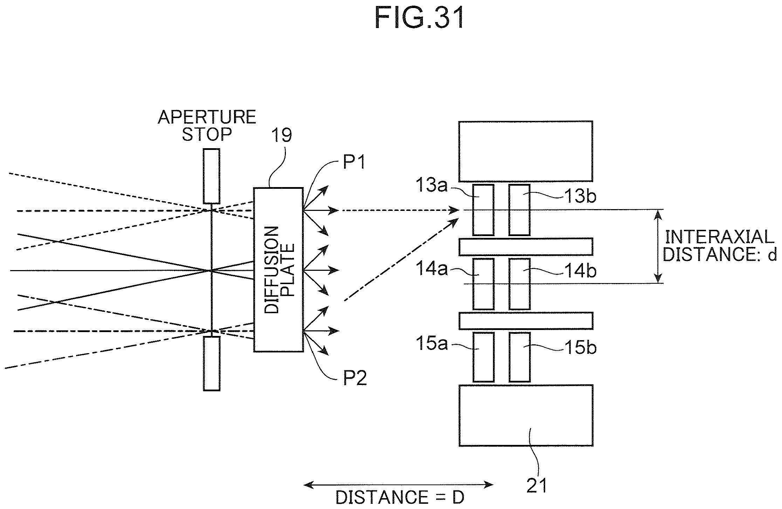

By contrast, with the configuration shown in Fig. 27, when interference filters are installed as the color filters 13a, 14a, 15a, the measuring probe is such as shown in Fig. 31. The position of incidence on the diffusion plate 19 depends on the directivity of the measurement object, and for example the light radiated upward from the measurement surface (broken line) is collected at the position p1 of the diffusion plate, whereas the light emitted downward from the measurement surface (dot-dash line) is collected at the position p2 of the diffusion plate. The angle of incidence from the position p1, which is close to one end of the diffusion plate, on the color filters 13a, 14a, 15a, and the angle of incidence from the position p2, which is close to the other end of the diffusion plate, on the color filters 13a, 14a, 15a are determined by the size of the diffusion plate 19, the distance D between the diffusion plate 19 and the color filters 13a, 14a, 15a, and the interaxial distance d between the diffusion plate 19 and the color filters 13a, 14a, 15a.

Therefore, in the case of the color filter 13a, the luminous flux from the position p1 is incident in a state with an angle of incidence close to 0 degrees, and the luminous flux from the position p2 is incident at a large angle. As a result, in the data that pass through the color filter p1 and are received by the light-receiving sensor 13b, the filter transmittance differs in the directivity information in the direction upward(a dotted line) and the directivity information in the direction downward (a dashed dotted line) from the measurement object. Therefore, the light-received data vary depending on the rotation direction of the measurement object and measurement device (rotation error).

### (Embodiment 1)

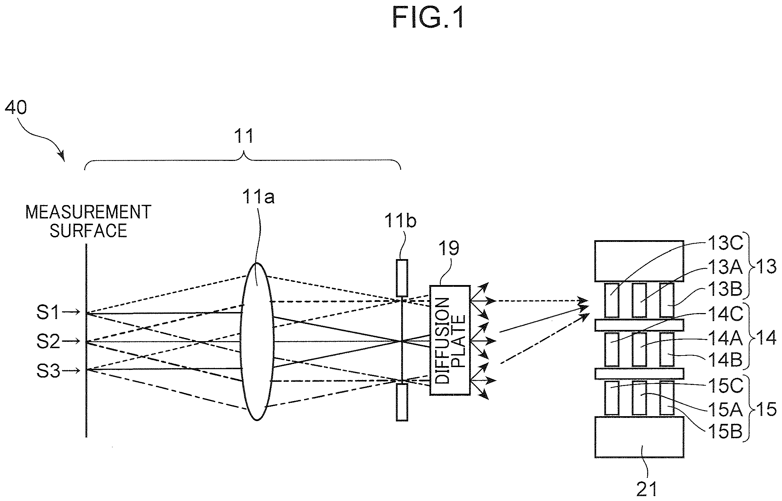

An embodiment will be described below. Fig. 1 illustrates the internal configuration (optical system for measurements) of a measuring probe 40 according to the first embodiment. This measuring probe 40 is used as the measuring probe 4 of the luminance colorimeter shown in Fig. 21 or the measuring probe 4 of the colorimeter shown in Fig. 22, which are described hereinabove. As an example of the measurement method, similarly to the configuration shown in Fig. 20 and described hereinabove, the luminance colorimeter is configured to include the measuring probe 40 that is disposed opposite the display screen 3 of the liquid crystal monitor 2 and measures light from the display screen 3, and the measurement device body 5 that determines a color luminance on the basis of the output of the measuring probe 40. In another example of the measurement method, the colorimeter is configured to include a measuring light illumination unit that illuminates a measurement object with measuring light, the measuring probe 40 that measures the reflected measuring light that is reflected by the measurement object, and the measurement device body that measures chromaticity on the basis of the output of the measuring probe 40. In the schematic block configuration of the measuring probe 40, the components of the measuring probe 40 that are analogous or corresponding to those of the measuring probe 4" shown in Fig. 27 are assigned with same reference symbols.

Thus, the measuring probe 40 is provided with the object optical system 11 that receives light from the measurement object, the diffusion plate 19 serving as the first diffusion member that is branching and diffusion optical system and that scatters the outgoing light from the object optical system 11, and a plurality of colorimetric optical systems 13, 14, 15 that are arranged in a row at the outgoing end side of the diffusion plate 19 and detect the outgoing light scattered by the diffusion plate 19. The biconvex lens 11a having positive optical power (inverse value of focal distance and refractive power) is used in the object optical system 11, and the aperture stop 11b is arranged at the rear focus position of the convex lens 11a. The object optical system 11 has a front telecentric optical arrangement to take in the components within a half-angle, α, for example, the aforementioned angle of ±2.5 degrees, with respect to the normal to the display screen 3, as described hereinabove.

In the measuring probe 40, interference filters are used as color filters 13A, 14A, 15A in the colorimetric optical systems 13, 14, 15. Therefore, the diffusion plate 19 is used as the first diffusion plate, the second diffusion plates 13C, 14C, 15C are introduced as the second diffusion members between the first diffusion plate 19 and the interference filters, and the interference filters are prepared to have predetermined transmission characteristic. Thus, the colorimetric optical systems 13, 14, 15 are provided, in the order of description from the measurement surface, with the second diffusion plates 13C, 14C, 15C that have incident thereon the outgoing light from the first diffusion plate 19 and scatter the outgoing light, the interference filters 13A, 14A, 15A that have incident thereon the outgoing light from the second diffusion plates 13C, 14C, 15C and transmit, as color filters, the outgoing light with a predetermined transmittance characteristic, and the light-receiving sensors 13B, 14B, 15B that have incident thereon the outgoing light from the interference filters 13A, 14A, 15A and detect the intensity of the outgoing light.

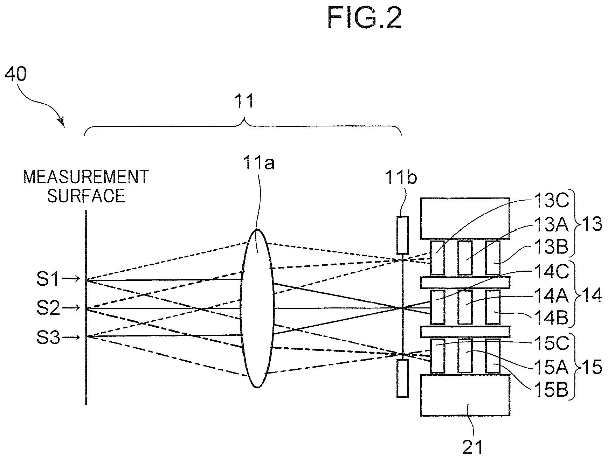

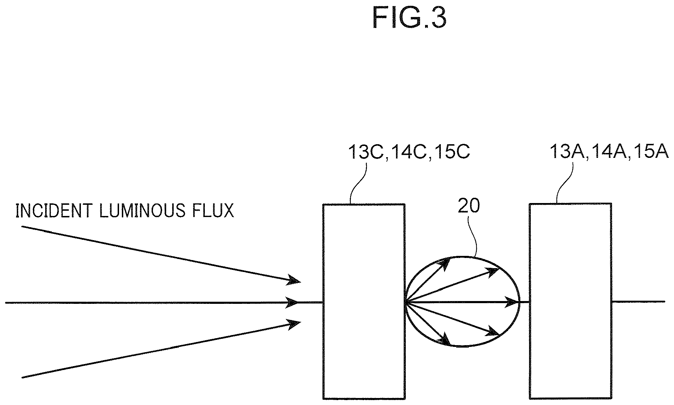

In the configuration without the first diffusion plate 19, as shown in Fig. 2, only the light (broken line) emitted upward from the measurement object is incident on the color filter 13A, as described hereinabove. Therefore, in the measuring probe 40 of the present embodiment, initially, the first diffusion plate 19 having diffusivity equal to or higher than a certain level is used in the same manner as shown in Fig. 27 and the colorimetric optical systems 13, 14, 15 are arranged with an appropriate spacing, thereby uniformizing (mixing), diffusing and transmitting the specific features of the measurement object with the first diffusion plate 19. Then, in the measuring probe 40 of the present embodiment, the second diffusion plates 13C, 14C, 15C are disposed coaxially with the interference filters (color filters 13A, 14A, 15A) and the light is caused to pass through the second diffusion plates 13C, 14C, 15C, whereby the information held by the luminous flux is uniformized, as shown by the reference symbol 20 in Fig. 3, and made incident on the interference filters (color filters 13A, 14A, 15A).

For example, frosted glass obtained from glass or quartz, glass mixed with microparticles, plastic resins (white acrylic plates or the like), and resin sheets (transparent silicone resin sheets or the like) can be used as the first and second diffusion plates 19; 13C, 14C, 15C.

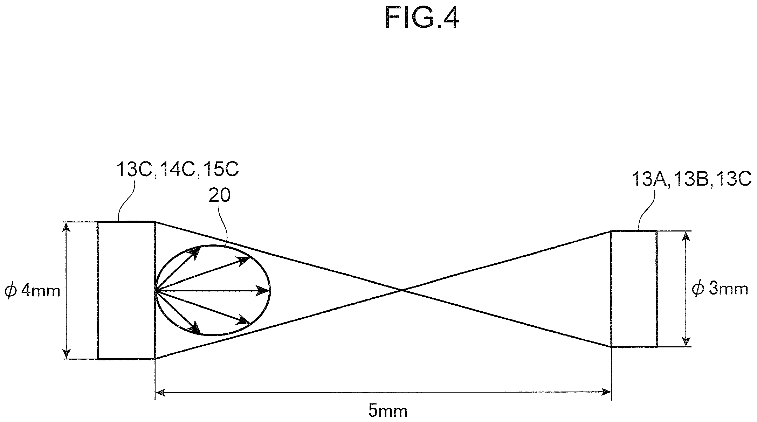

When the below-described light blocking members 21 that absorb light are provided, the angle of incidence on the interference filters (color filters 13A, 14A, 15A) is determined by the distance between the second diffusion plates 13C, 14C, 15C and the interference filters (color filters 13A, 14A, 15A) and the size thereof. When the size is the same, the angle of incidence on the interference filters (color filters 13A, 14A, 15A) increases with the decrease in distance. For example, as shown in Fig. 4, when the effective diameter of the second diffusion plates 13C, 14C, 15C is *φ* 4 mm, the effective diameter of the interference filters is *φ* 3 mm, and the distance between the second diffusion plates 13C, 14C, 15C and the interference filters is 5 mm, the angle of incidence on the interference filters is tan⁻¹ ((2 + 1.5)/5) = 35 degrees (half-angle). The intensity distribution versus the angle of incidence on the interference filters (color filters 13A, 14A, 15A) is determined by characteristics of the second diffusion plates 13C, 14C, 15C and the distance between the diffusion plates and the interference filters (color filters 13A, 14A, 15A).

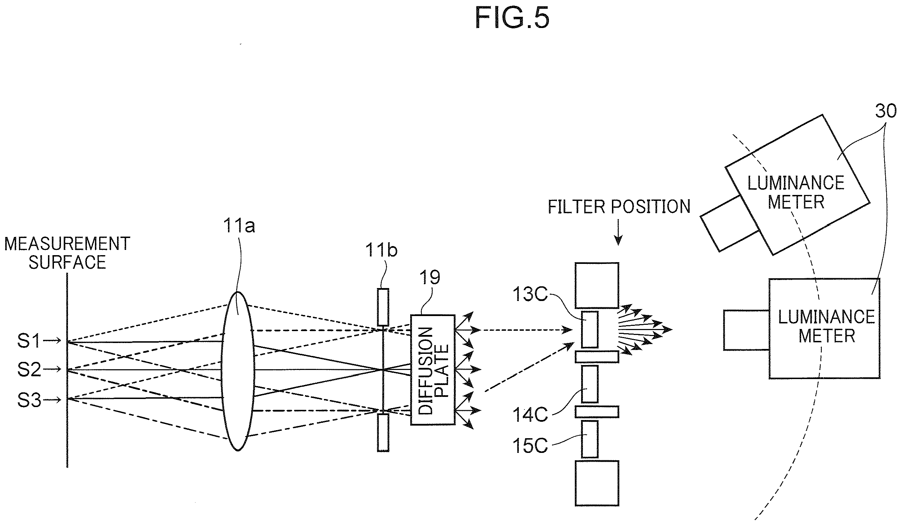

The relationship between the angle of incidence on the interference filters and the transmittance in the optical system for measurements of the above-described configuration is such as shown in the above-described Fig. 30 (example of Y filter). By contrast, in the present embodiment, the actual intensity distribution versus the luminous flux incident on the interference filters (color filters 13A, 14A, 15A), which changes on the basis of the size and distance between the second diffusion plates 13C, 14C, 15C and the interference filters (color filters 13A, 14A, 15A) and the characteristics of the second diffusion plates 13C, 14C, 15C, is determined, for example, by measurements such as illustrated by Fig. 5 or by simulation. In Fig. 5, the intensity of luminous flux emitted from the second diffusion plates 13C, 14C, 15C is measured at all solid angles (corn angles) by moving the luminance meter 30 along the same radius from the center of the second diffusion plates 13C, 14C, 15C.

The aforementioned light blocking members 21 are provided so as to compartmentalize the sets of the second diffusion plates 13C, 14C, 15C, interference filters (color filters 13A, 14A, 15A), and light-receiving sensors 13B, 14B, 15B and prevent the generation of unnecessary outgoing and incident light, and when the intensity distribution of the luminous flux incident on the interference filters (color filters 13A, 14A, 15A) is measured, the light blocking members 21 are cut at the positions of the interference filters (color filters 13A, 14A, 15A).

Meanwhile, in the case of simulation, the angle of incidence on the interference filters (color filters 13A, 14A, 15A) is determined by the catalog values of diffusion characteristics of the second diffusion plates 13C, 14C, 15C. The intensity distribution versus the incident luminous flux on the filter face can be calculated using lens simulation software from individual conditions or characteristics of the optical components constituting the system. For example, the conditions for light outgoing from the second diffusion plates 13C, 14C, 15C are taken as the conditions for catalog values of the aforementioned diffusion characteristic and light beam tracking simulation is performed.

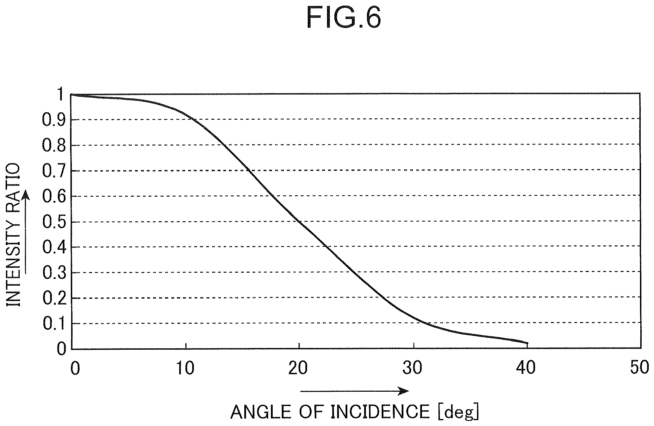

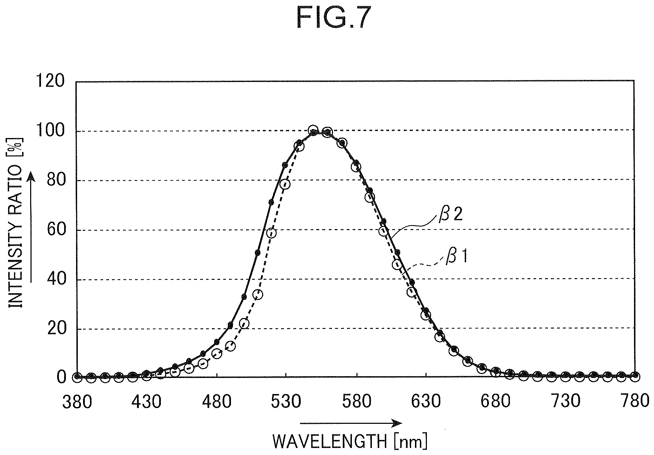

Fig. 6 shows an example of intensity distribution of the luminous flux incident on the interference filters that is determined in the above-described manner. In the example shown in Fig. 6, variations in the intensity are shown with respect to the case (one-dimensional case) in which the luminance meter 30 is moved on a circular arc within a predetermined range. A filter transmittance set while taking into account an intensity distribution with respect to incident angles can be calculated by multiplying a relative intensity (relative intensity derived based on solid angles: so-called "transmittance in cone angles"), as shown in FIG. 6, by a transmittance of the interference filter for each incident angle, as illustrated in FIG. 30. As a result, a curve is obtained, for example, such as shown in Fig. 7 by a reference symbol β1 (broken line).

A light reception sensitivity finally obtained by a measuring device is determined by considering characteristics such as a transmittance of the optical system (lenses, optical fibers, etc.), light reception sensitivity of the light-receiving sensor, a reflection characteristic of a surface of the light-receiving sensor or the like, as well as the above filter transmittance. In the present embodiment, the interference filters are prepared such that the finally obtained light reception sensitivity approximates the desired (CIE-stipulated) isochromatic function such as shown by the reference symbol β2 (solid line) in Fig. 7.

The spread condition of the angle of incidence on the interference filters (color filters 13A, 14A, 15A) is explained below. Where the interference filters (color filters 13A, 14A, 15A) are installed obliquely due to a component error or the like, the intensity distribution for the angle of incidence on the interference filters (color filters 13A, 14A, 15A) shifts from the designed value, the obtained filter transmittance changes accordingly, and therefore the sensor light reception sensitivity distribution also changes. Thus, the effect of transmittance variations in the case where the filters are thus installed obliquely is larger for narrow intensity distributions. Therefore, it is desirable that the intensity distribution versus the angle of incidence on the filter have a spread equal to or larger than a certain level.

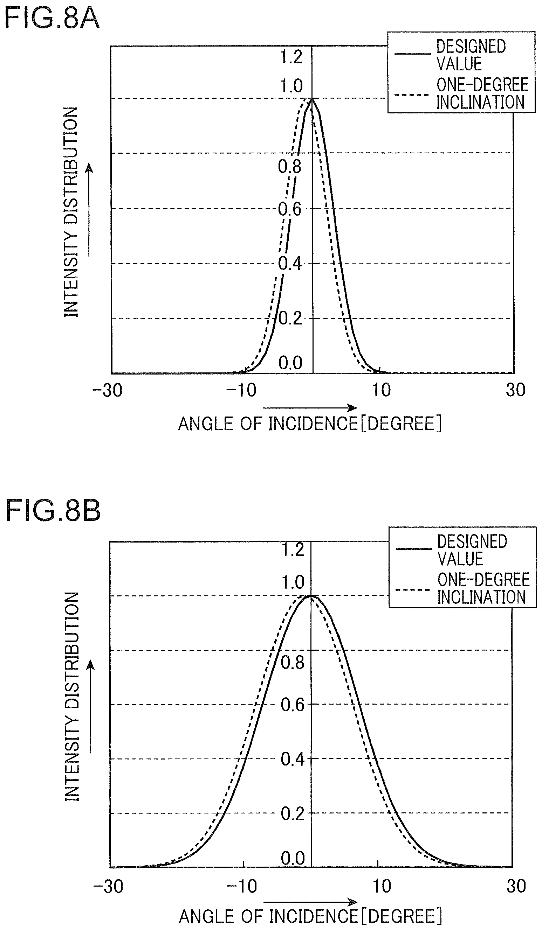

Fig. 8 shows the distribution of the angle of incidence and the effect in the case where the filter is inclined. Fig. 8A is a graph illustrating the intensity distribution (solid line) of design values in the case where the angle of incidence is 7.5 degrees (half angle) and the intensity distribution (broken line) in the case where the filter is inclined at 1 degree. Fig. 8B is a graph illustrating the intensity distribution (solid line) of design values in the case where the angle of incidence is 17.5 degrees (half angle) and the intensity distribution (broken line) in the case where the filter is inclined at 1 degree. The angle of incidence of 7.5 degrees (half angle), as referred to herein, is an angle corresponding to about 5% with respect to the peak of the intensity distribution versus the angle of incidence (usually, the peak is most often at 0 degrees).

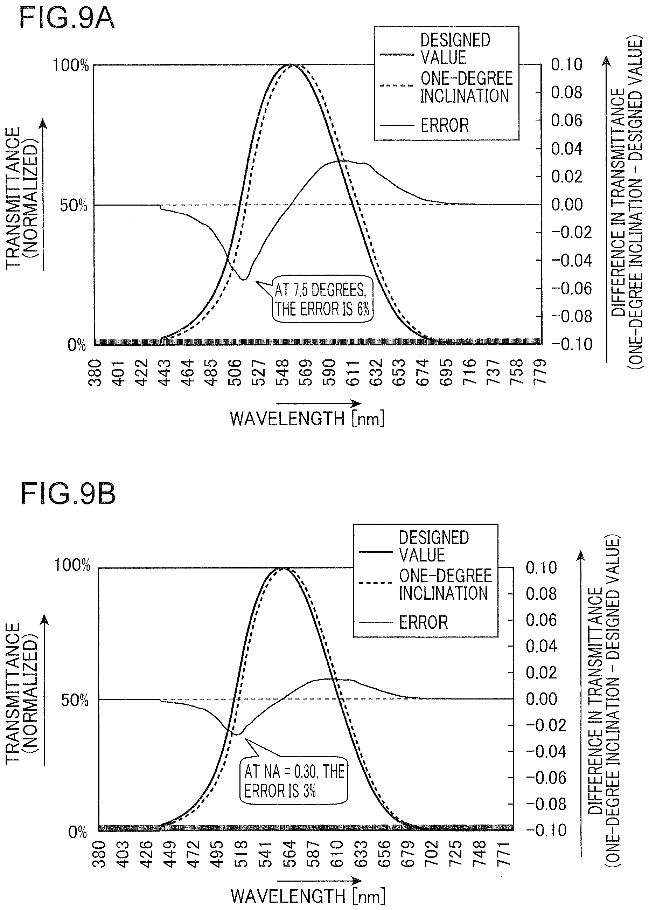

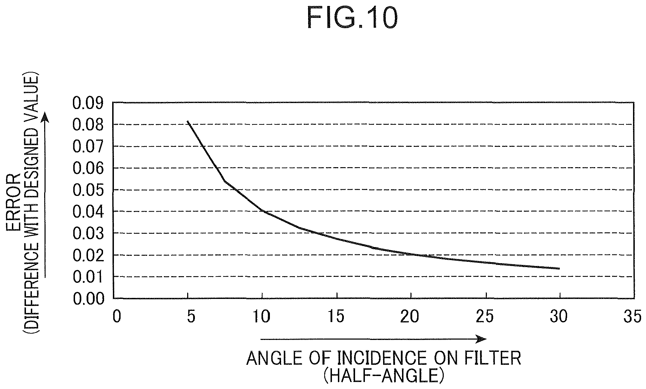

Fig. 9A and Fig. 9B show the transmittance distributions obtained in the case where the interference filters shown in Fig. 31 are disposed in the optical system with the distribution of the angle of incidence shown in Fig. 8A and Fig. 8B. In Fig. 9A and Fig. 9B, the displacement of the values obtained with the inclined filters with respect to the designed values is shown on the enlarged scale. As is clear from comparison between Figs. 9A and 9B, an error due to inclination of the filter becomes smaller as the intensity distribution with respect to incident angles becomes wider. The relationship between a level of incident angle onto the filter (filter incident angle) and an error (a difference from the design value) is graphically represented as a curve illustrated in Fig. 10. Fig. 10 shows that, in a situation where the filter is inclined by 1 degree, the error can be suppressed to 2.5% or less by setting the divergence of the incident angle to above 15 degrees (half angle). Thus, in view of error sensitivity with respect to inclination of the filter during practical use, the divergence of the incident angle onto the interference filter is set to 15 degrees or more (half angle).

As described hereinabove, the measuring probe 40 of the present embodiment is used in a luminance colorimeter or a colorimeter, the luminous flux emitted from a light source and the reflected luminous flux from the measurement object are received by the object optical system 11, transmitted by the first diffusion plate 19, branched and diffused and then transmitted by the color filters 13A, 14A, 15A constituted by interference filters, and made incident on the light-receiving sensors 13B, 14B, 15B that determine the intensity (luminance or illuminance value) of the luminous flux. Therefore, the second diffusion plates 13C, 14C, 15C are interposed between the first diffusion plate 19 and the color filters 13A, 14A, 15A and the transmittance characteristics of the interference filters are prepared such as to resolve the problems associated with the absorption-type color filters.

Therefore, the uniformized luminous flux having a predetermined light distribution is made outgoing from the outgoing surface of the second diffusion plates 13C, 14C, 15C and the measuring probe 40 makes it possible to obtain stable light reception sensitivity data, regardless of the position at the first diffusion plate 19 from which the luminous flux is made incident, that is, regardless of position information or angle information on the measurement object. Therefore, the transmittance characteristic of each of the interference filters is set such that, when the luminous flux with the predetermined luminous intensity distribution becomes incident on the interference filter, a resulting transmitted luminous flux has a transmittance characteristic corresponding to a measurement parameter of the light-receiving sensor 13B, 14B, 15B. As a result, the luminous intensity
distribution is widened but uniformized (normalized), and the transmittance characteristic of the interference filter is coordinated with the luminous intensity distribution, instead.

Therefore, with the measuring probe 40 of the present embodiment, the shortcomings of the interference filters such as a large shift in the transmittance characteristic caused by changes in the angle of incidence can be overcome, while preserving the merits of the interference filters, namely, the possibility of setting a random transmittance characteristic, small loss of quantity of light, and high stability.

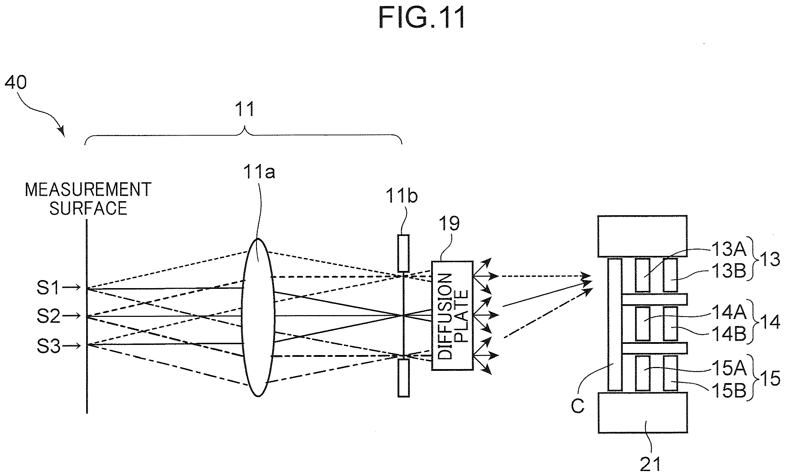

In the above-described embodiments, the second diffusion plates 13C, 14C, 15C may be constituted, similarly to the first diffusion plate 19, by a single plate such as the second diffusion plate C shown in Fig. 11. In this case, light is blocked between the interference filters (color filters 13A, 14A, 15A) and the light-receiving sensors 13B, 14B, 15B, which are arranged after the diffusion plate, by the light blocking members 21, and the optical paths thereof are maintained.

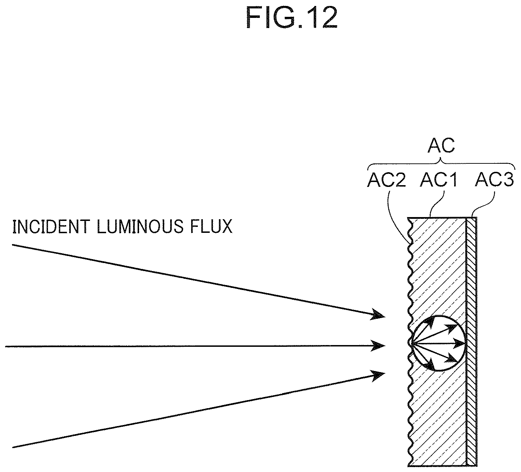

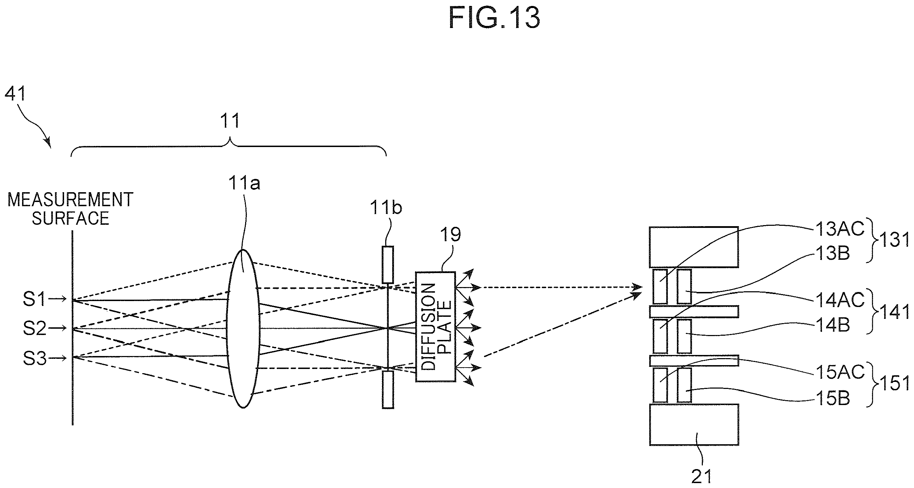

Further, in the above-described embodiment, as shown in a color filter AC in Fig. 12, a second diffusion plate AC2 is constituted by forming a rough surface on the incident surface side of a common glass substrate AC1, and a interference filter AC3 is deposited on the outgoing surface side, thereby forming those second diffusion plate AC2 and the interference filter AC3 on one common glass substrate AC1. The internal configuration of a measuring probe 41 in this case is such as shown in Fig. 13. Thus, in colorimetric optical systems 131, 141, 151, the interference filters (color filters 13A, 14A, 15A) and the second diffusion plates 13C, 14C, 15C are shared by the interference filters 13AC, 14AC, 15AC.

### (Embodiment 2)

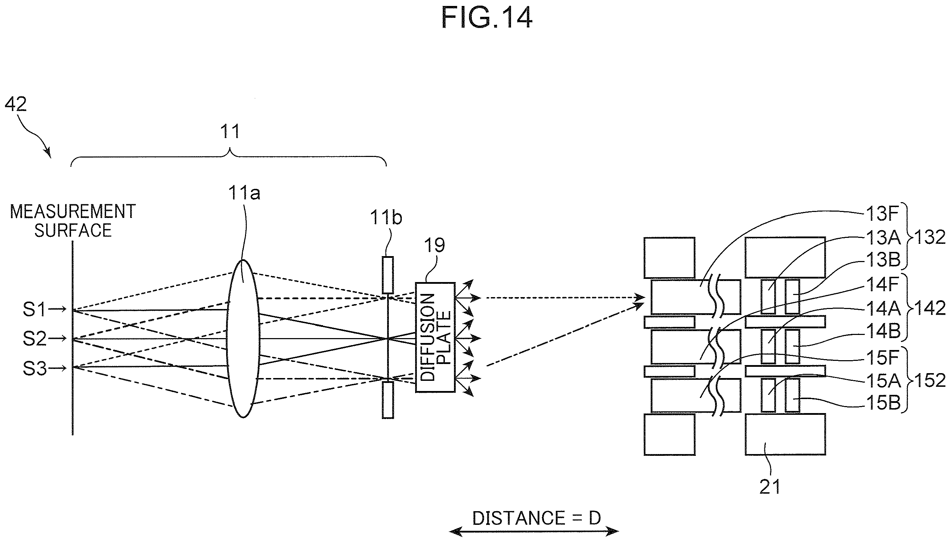

Fig. 14 illustrates the internal configuration (optical system for measurements) of a measuring probe 42 in the second embodiment. This measuring probe 42 is similar to the measuring probe 40 shown in Fig. 1, the corresponding components thereof are assigned with like reference symbols, and the explanation thereof is omitted. In the measuring probe 42 of the present embodiment, the colorimetric optical systems 132, 142, 152 are provided with single optical fibers 13F, 14F, 15F, instead of the second diffusion plates 13C, 14C, 15C of the first embodiment, as the second diffusion members.

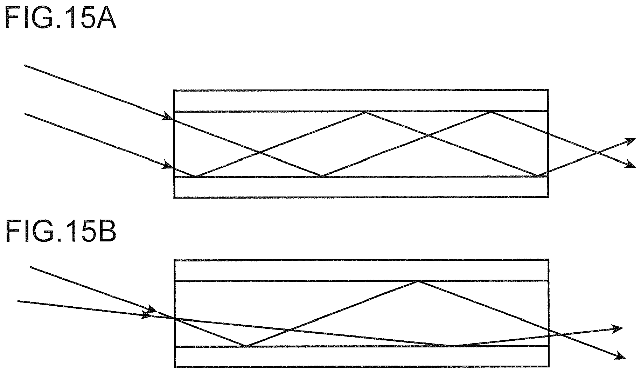

In this configuration, the optical fiber ideally guides the incident light by causing total reflection of the incident light, as shown in Fig. 15, by using the difference in refractive index between a core and a cladding. However, due to a local difference (pulsations) in the refractive index, local difference in the fiber diameter (thick, thin), or strains in the material (refractive index) or curving of the reflective surface caused by inflection of the fiber, the outgoing position and outgoing angle are actually random, the incident light does not propagate in such an ideal form, and the outgoing light is uniformized (outgoing position and outgoing angle are random). Therefore, when an optical fiber of a certain length is used, the outgoing light is uniformized and goes out under stable angle conditions at all times, regardless of the features of the light incident on the optical fibers (the effect similar to that of the diffusion plate; it is possible to obtain a quantity of light larger than in the case of a diffusion plate). Such characteristics of the optical fibers are used in the measuring probe 42 of the present embodiment.

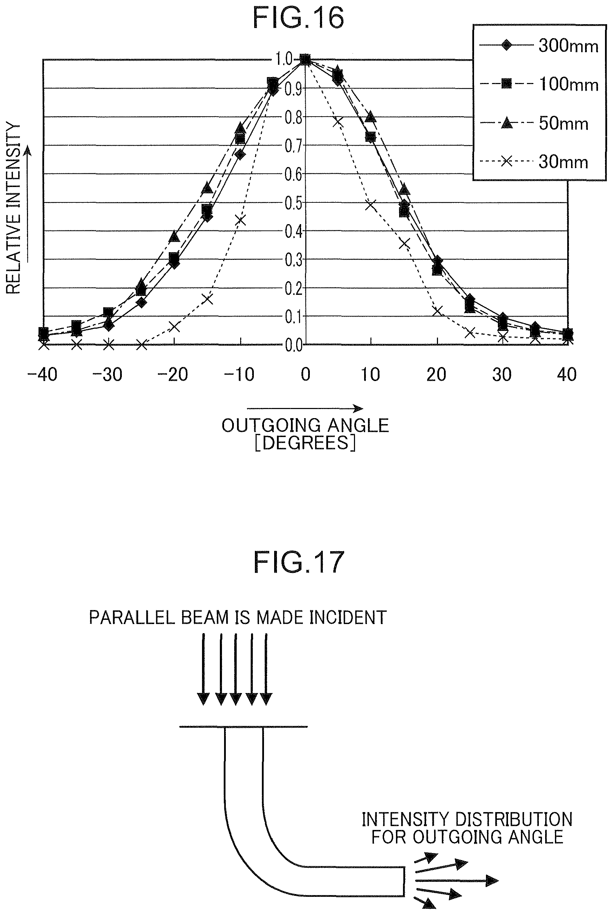

Fig. 16 shows the test results obtained by the inventors. Fig. 16 is a graph illustrating the data obtained by measuring the outgoing angle in an optical fiber. In the test, as shown in Fig. 17, a generally parallel light beam (luminous flux equal to or less than ±2 degrees) was made incident on the optical fiber, the angle from the fiber axis (cone angle) was varied, in the same manner as in Fig. 5, by a luminance meter (not shown in the figure) arranged close to the outgoing end of the fiber, and the relative intensity at each angle was measured by taking the peak intensity (at a position of almost 0°) as 1. The fiber was 90° bent in one location. The fiber was a plastic fiber (NA = 0.5, diameter *φ* 1 mm), and the length was changed as 30 mm (×), 50 mm (▲), 100 mm (■), and 300 mm (◆).

In the case of a parallel incident beam, as follows from Fig. 16, the effective aperture angle (width of the peak at 5% intensity) at a fiber length of 50 mm is about ±35°, and the aperture angle practically does not change and remains stable when the fiber is 50 mm or longer. Meanwhile, when the fiber length is 30 mm, the intensity distribution of the outgoing light is narrow and the degree of mixing (uniformity) is low. However, the test results relate to the case of a parallel incident beam, whereas in the actual optical system, the light incident on the fiber has an angular spread. Therefore, the data obtained under the test conditions (parallel incident beam) correspond to most severe conditions.

Therefore, since a luminous flux having a central angle, rather than the parallel luminous flux, is incident in the actual optical system, sufficiently uniform mixing can be attained when the single optical fibers 13F, 14F, 15F have a length equal to or larger than 30 mm. Further, the relationship between the incident light, outgoing light, and fiber length depends on the number of reflections between the core and the cladding occurring when the light is guided in the fiber. Therefore, since in the test data the necessary fiber length at a diameter of *φ* 1 mm is 30 mm, it is desirable that the fiber length is equal to or greater than 30 times as large as the fiber diameter. By using an optical fiber of such length it is possible to uniformize the outgoing angle (carry no information intrinsic to the outgoing angle) and obtain stable outgoing angle conditions at all times.

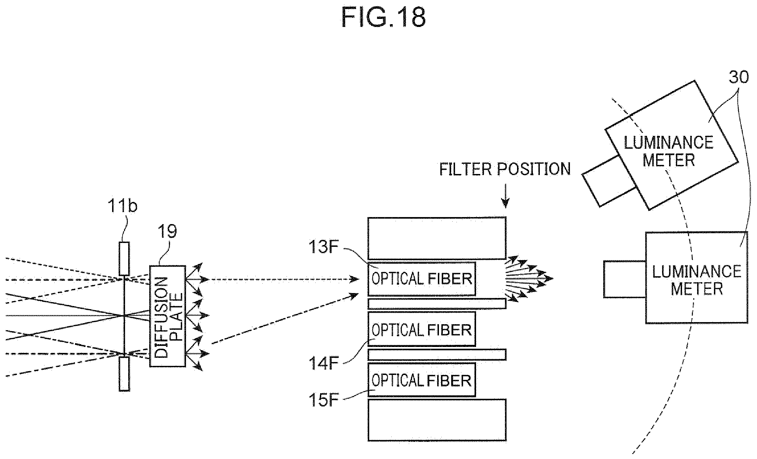

Concerning the numerical aperture NA of the optical fiber, when the fiber is long, the outgoing angle from the fiber is approximately equal to the NA condition of the fiber, as mentioned hereinabove. Therefore, the fiber NA should be larger than 0.26 (= sin 15 degrees). The actual intensity distribution of the luminous flux incident from the single optical fibers 13F, 14F, 15F on the interference filters (color filters 13A, 14A, 15A) may be determined by the measurements such as illustrated by Fig. 18, which are similar to those shown in Fig. 5, or by simulation. In the case of simulation, the outgoing conditions of the fiber correspond to the NA conditions intrinsic to the fiber.

Thus, by using the single optical fibers 13F, 14F, 15F, the measuring probe 42 of the present embodiment makes it is possible to reduce greatly the loss of quantity of light by comparison with the case in which the second diffusion plates 13C, 14C, 15C are used.

### (Embodiment 3)

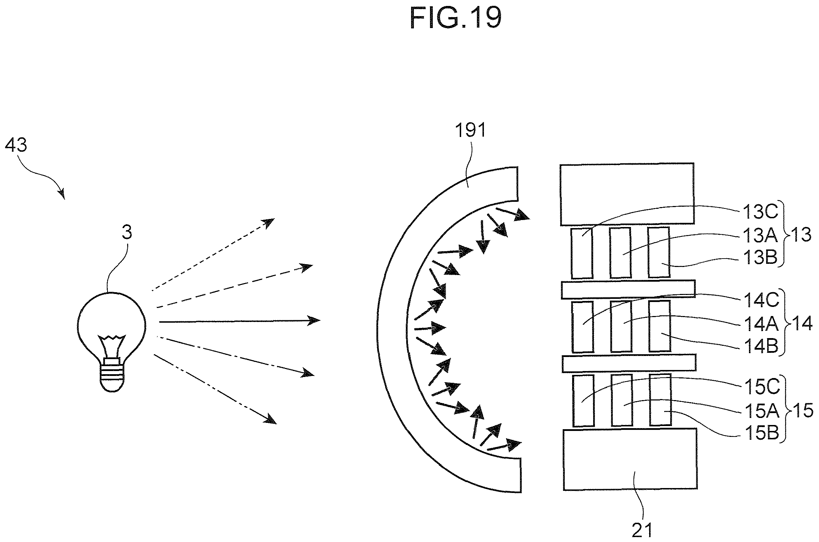

Fig. 19 illustrates the internal configuration (optical system for measurements) of a measuring probe 43 in the third embodiment. This measuring probe 43 is similar to the measuring probe 40 shown in Fig. 1, the corresponding components thereof are assigned with like reference symbols, and the explanation thereof is omitted. In the measuring probe 43 of the present embodiment, a first diffusion plate 191 is formed in a dome-like shape that covers the second diffusion plates 13C, 14C, 15C. Thus, the first diffusion member may be configured differently.

The specification discloses the aforementioned arrangements. The following is a summary of the primary arrangements of the embodiments.

An optical system for measurements according to one aspect includes: a first diffusion member on which a luminous flux from a measurement object is made incident, and a plurality of sets of interference filters that are arranged in a row at the outgoing end side of the first diffusion member, receive the outgoing light scattered by the first diffusion member as incident light, transmit the incident light with mutually different predetermined transmittance characteristics, and made the transmitted light incident on respective sensors that determine the intensity of the luminous flux, wherein second diffusion members are further included that are arranged before the interference filters, and the interference filters are formed such that transmittance characteristics corresponding to a measurement parameter are obtained correspondingly to intensity distribution conditions for an angle of incidence of the incident light incident from the second diffusion members on the interference filters.

The optical system for measurements of the above-described configuration is suitable, for example, for a luminance colorimeter or a colorimeter. In such an optical system for measurements, the luminous flux emitted from a light source such as a liquid crystal monitor or a lamp in the case of a luminance colorimeter, or the reflected luminous flux from the measurement object generated by the illuminating light from a predetermined illumination light source in the case of a colorimeter, is scattered by the first diffusion member, made incident on a plurality of interference filters, transmitted by the plurality of interference filters having predetermined mutually different transmission characteristics, and then made incident on the sensors that determine the intensity (luminance or illuminance value) of the luminous flux. Such an optical system for measurements resolves the problem created to the absorption-type optical filters. Further, in such an optical system for measurements, a plurality of second diffusion members is introduced before the respective interference filters and the transmittance characteristics of the plurality of interference filters are adjusted.

More specifically, since the second diffusion members are introduced, the uniformized luminous flux having a predetermined light distribution is made outgoing from the outgoing surface of the second diffusion members, regardless of the position at the first diffusion member from which the luminous flux is made incident. Thus, the luminous flux is made incident on the measuring probes after the position information or angle information of the measurement object has been uniformized. Then, the transmittance characteristics of the interference filters are set such that the transmitted luminous flux corresponds to the measurement parameters of the sensors when the luminous flux having the predetermined light distribution from the outgoing surfaces of the second diffusion members is the incident luminous flux. Thus, in the conventional configurations, measures are taken to obtain the luminous flux incident on the interference filters that is as close to a parallel beam as possible (narrow light distribution) in order to suppress the shift of the transmittance characteristic caused by the angle of incidence on the interference filters. By contrast, in the present configuration, the light distribution of the luminous flux incident on the interference filters is made uniform by the second diffusion members even when the light distribution is wide, or the transmittance characteristics of the interference filters are matched with such light distribution.

Therefore, with the optical system for measurements of such configuration, the shortcomings of the interference filters such as a large shift in the transmittance characteristic caused by changes in the angle of incidence can be overcome, while preserving the merits of the interference filters, namely, the possibility of setting a random transmittance characteristic, small loss of quantity of light, and high stability.

In the optical system for measurements according to another aspect, the first diffusion member is a diffusion plate, and the second diffusion member is also a diffusion plate.

In the optical system for measurements of such a configuration, by arranging the first and second diffusion plates at a certain distance from each other, it is possible to uniformize, as described hereinabove, the luminous flux incident on the interference filters.

It is preferred that the first and second diffusion plates be constituted by one plate.

In the optical system for measurements according to another aspect, the diffusion plate that is the second diffusion member is realized by forming a rough surface on the incidence face side of a common glass substrate, and the interference filters are formed on the outgoing surface side of the common glass substrate.

In the optical system for measurements of the above-described configuration, the second diffusion plates and interference filters can be formed on one substrate.

In the optical system for measurements according to another aspect, the first diffusion member is a diffusion plate, and the second diffusion member is a single optical fiber.

With such a configuration, the effect of the incident light distribution can be mediated by using an optical fiber of a certain length, more specifically a length that is 30 or more times the core diameter. Thus, with a single optical fiber having a certain length, the outgoing position and outgoing angle become random and the diffusion effect similar to that of the diffusion plate can be obtained. Further, the single optical fiber can be realized the distribution of outgoing angle under the NA conditions intrinsic to the fiber and the loss of quantity of light can be reduced by comparison with that in the diffusion plate.

In the optical system for measurements according to another aspect, the diffusion plate that is the first diffusion member is formed in a dome-like shape that covers the second diffusion member side.

The luminance colorimeter and colorimeter according to another aspect use any of the above-described optical systems for measurements.

Therefore, with the luminance colorimeter and colorimeter of such a configuration, it is possible to realize high-accuracy luminance colorimeter and colorimeter using interference filters.

This application claims priority to Japanese Patent Application No. 2010-99830 filed on April 23, 2010.

The present invention is explained hereinabove by the embodiments thereof with reference to the drawings to a degree adequate and sufficient to realize the present invention, but it should be understood that the above-described embodiments can be easily changed and/or modified by a person skilled in the art. The invention is defined by the appended claims.

### Industrial Applicability

The present invention provides an optical system for measurements, and also a luminance colorimeter and a colorimeter using same.

## Claims

1. An optical system for measurements (40, 41, 42, 43), comprising:
a first diffusion member (19, 191) on which a luminous flux from a measurement object (3) is made incident; and
a plurality of colorimetric optical systems (13, 14, 15) that are arranged in a row at the outgoing end side of the first diffusion member and detect outgoing light from the first diffusion member, wherein
each of the plurality of colorimetric optical systems is provided with:
a second diffusion member (13C, 14C, 15C; 13AC2, 14AC2, 15AC2; 13F, 14F, 15F) on which the outgoing light from the first diffusion member is made incident,
an interference filter (13A, 14A, 15A; 13AC3, 14AC3, 15AC3) on which the outgoing uniformized light from the second diffusion member is made incident with a predetermined luminous intensity distribution as a function of incidence angle in a range of incident angles, regardless of position information or angle information on the measurement object, the interference
filter transmitting the outgoing light with a predetermined transmittance characteristic; and
a light-receiving sensor (13B, 14B, 15B) on which the outgoing light from the interference filter is made incident and which detects an intensity of the outgoing light, and wherein:
the optical system for measurements causes the luminous flux from the measurement object to first diffuse and transmit through the first diffusion member (19), and next to transmit through the second diffusion member,
the divergence of the light beam incident onto the interference filter (13A, 14A, 15A; 13AC3, 14AC3, 15AC3) is set to 15 degrees or more half angle, and
the predetermined transmittance characteristic of each of the interference filters is set by taking into account the predetermined intensity distribution as a function of incident angle of the light beam incident on the interference filter, such that the finally obtained light reception sensitivity approximates a desired CIE-stipulated isochromatic function.

2. The optical system for measurements (40, 41, 43) according to claim 1, wherein
the first diffusion member is a diffusion plate (19, 191), and the second diffusion member (13C, 14C, 15C) is also a diffusion plate.

3. The optical system for measurements (40) according to claim 2, wherein the second diffusion member is one diffusion plate (C) provided to be shared by the plurality of colorimetric optical systems (13, 14, 15).

4. The optical system for measurements (40) according to any of claims 1 to 3, wherein
the second diffusion member is a diffusion plate (13AC2, 14AC2, 15AC2) constituted by a common glass substrate (13AC1, 14AC1, 15AC1) in which an incidence face side is roughened; and
each of the plurality of interference filters (13AC3, 14AC3, 15AC3) in the plurality of colorimetric measurement systems (13, 14, 15) is formed on an outgoing surface side of the common glass substrate.

5. The optical system for measurements (42) according to claim 1, wherein
the first diffusion member is a diffusion plate (19), and the second diffusion member is a single optical fiber (13F, 14F, 15F).

6. The optical system for measurements (43) according to any one of claims 2 to 5, wherein
the first diffusion member (191) is a diffusion plate formed in a dome-like shape that covers the second diffusion member side.

7. A luminance colorimeter (1) comprising the optical system for measurements (40, 41, 42, 43) according to any one of claims 1 to 6.

8. A colorimeter comprising (1) the optical system for measurements (40, 41, 42, 43) according to any one of claims 1 to 6.

## Patentansprüche

1. Optisches System für Messungen (40, 41, 42, 43), umfassend:
ein erstes Diffusionselement (19, 191), auf das ein Lichtstrom von einem Messobjekt (3) zum Einfallen gebracht wird; und
eine Vielzahl von colorimetrischen optischen Systemen (13, 14, 15), die in einer Reihe an der abgehenden Endseite des ersten Diffusionselements angeordnet sind und abgehendes Licht von dem ersten Diffusionselement detektieren, wobei
jedes der Vielzahl von colorimetrischen optischen Systemen bereitgestellt wird mit:
einem zweiten Diffusionselement (13C, 14C, 15C; 13AC2, 14AC2, 15AC2; 13F, 14F, 15F), auf welches das abgehende Licht von dem ersten Diffusionselement zum Einfallen gebracht wird,
einem Interferenzfilter (13A, 14A, 15A; 13AC3, 14AC3, 15AC3), auf welchen das abgehende uniformierte Licht von dem zweiten Diffusionselement mit einer vorher festgelegten Lichtintensitätsverteilung in Abhängigkeit von dem Einfallswinkel in einem Bereich von Einfallswinkeln, ungeachtet von Positionsinformationen oder Winkelinformationen an dem Messobjekt, zum Einfallen gebracht wird, wobei der Interferenzfilter das abgehende Licht mit einer vorher festgelegten Durchlässigkeitscharakteristik überträgt; und
einem lichtempfangenden Sensor (13B, 14B, 15B), auf welchen das abgehende Licht von dem Interferenzfilter zum Einfallen gebracht wird und welcher eine Intensität des abgehenden Lichts detektiert, und wobei:
das optische System für Messungen bewirkt, dass der Lichtstrom von dem Messobjekt zuerst gestreut und durch das erste Diffusionselement (19) übertragen wird und als nächstes durch das zweite Diffusionselement übertragen wird,
die Divergenz des Lichtstrahls, der auf den Interferenzfilter (13A, 14A, 15A; 13AC3, 14AC3, 15AC3) auftrifft, auf 15 Grad oder mehr Halbwinkel eingestellt wird, und
die vorher festgelegte Durchlässigkeitscharakteristik von jedem der Interferenzfilter unter Berücksichtigung der vorher festgelegten Intensitätsverteilung in Abhängigkeit von dem Einfallswinkel des Lichtstrahls eingestellt wird, der auf den Interferenzfilter auftrifft, sodass die letztendlich erhaltene Lichtempfangsempfindlichkeit sich einer gewünschten CIR-vorgeschriebenen isochromatischen Funktion annähert.

2. Optisches System für Messungen (40, 41, 43) nach Anspruch 1, wobei
das erste Diffusionselement eine Diffusionsplatte (19, 191) ist und das zweite Diffusionselement (13C, 14C, 15C) ebenfalls eine Diffusionsplatte ist.

3. Optisches System für Messungen (40) nach Anspruch 2, wobei das zweite Diffusionselement eine Diffusionsplatte (C) ist, die bereitgestellt wird, um von der Vielzahl von colorimetrischen optischen Systemen (13, 14, 15) geteilt zu werden.

4. Optisches System für Messungen (40) nach einem der Ansprüche 1 bis 3, wobei
das zweite Diffusionselement eine Diffusionsplatte (13AC2, 14AC2, 15AC2) ist, die aus einem gewöhnlichen Glassubstrat (13AC1, 14AC1, 15AC1) besteht, in welchem eine einfallsseitige Seite aufgeraut ist; und
jeder der Vielzahl von Interferenzfiltern (13AC3, 14AC3, 15AC3) in der Vielzahl von colorimetrischen Messsystemen (13, 14, 15) auf einer abgehenden Oberflächenseite des gewöhnlichen Glassubstrats gebildet ist.

5. Optisches System für Messungen (42) nach Anspruch 1, wobei
das erste Diffusionselement eine Diffusionsplatte (19) ist und das zweite Diffusionselement eine einzelne optische Faser (13F, 14F, 15F) ist.

6. Optisches System für Messungen (43) nach einem der Ansprüche 2 bis 5, wobei
das erste Diffusionselement (191) eine Diffusionsplatte ist, die in einer kuppelartigen Gestalt gebildet ist, die die zweite Diffusionselementseite abdeckt.

7. Leuchtdichte-Colorimeter (1), umfassend das optische System für Messungen (40, 41, 42, 43) nach einem der Ansprüche 1 bis 6.

8. Colorimeter, umfassend (1) das optische System für Messungen (40, 41, 42, 43) nach einem der Ansprüche 1 bis 6.

## Revendications

1. Système optique (40, 41, 42, 43) pour des mesures (, comprenant :
un premier élément de diffusion (19, 191) sur lequel un flux lumineux provenant d'un objet de mesure (3) est rendu incident ; et
une pluralité de systèmes optiques colorimétriques (13, 14, 15) qui sont agencés dans une rangée du côté d'extrémité de sortie du premier élément de diffusion et détectent une lumière de sortie provenant du premier élément de diffusion, dans lequel
chacun de la pluralité de systèmes optiques colorimétriques est pourvu :
d'un second élément de diffusion (13C, 14C, 15C; 13AC2, 14AC2, 15AC2 ; 13F, 14F, 15F) sur lequel la lumière de sortie provenant du premier élément de diffusion est rendue incidente,
un filtre d'interférence (13A, 14A, 15A; 13AC3, 14AC3, 15AC3) sur lequel la lumière uniformisée de sortie provenant du second élément de diffusion est rendue incidente avec une distribution d'intensité lumineuse prédéterminée en fonction de l'angle d'incidence dans une plage d'angles d'incidence, indépendamment d'informations de position ou d'informations d'angle sur l'objet de mesure, le filtre d'interférence transmettant la lumière de sortie avec une caractéristique de transmittance prédéterminée ; et
un capteur de réception de lumière (13B, 14B, 15B) sur lequel la lumière de sortie provenant du filtre d'interférence est rendue incidente et qui détecte une intensité de la lumière de sortie,
et dans lequel :
le système optique pour des mesures provoque tout d'abord la diffusion et la transmission du flux lumineux provenant de l'objet de mesure à travers le premier élément de diffusion (19), et ensuite sa transmission à travers le second élément de diffusion,
la divergence du faisceau de lumière incident sur le filtre d'interférence (13A, 14A, 15A ; 13AC3, 14AC3, 15AC3) est réglée à un demi-angle de 15 degrés ou plus, et
la caractéristique de transmittance prédéterminée de chacun des filtres d'interférence est réglée en prenant en compte la distribution d'intensité prédéterminée en fonction de l'angle d'incidence du faisceau de lumière incident sur le filtre d'interférence, de sorte que la sensibilité de réception de lumière finalement obtenue s'approche d'une fonction isochromatique souhaitée stipulée par la CIE.

2. Système optique (40, 41, 43) pour des mesures selon la revendication 1, dans lequel
le premier élément de diffusion est une plaque de diffusion (19, 191), et le second élément de diffusion (13C, 14C, 15C) est également une plaque de diffusion.

3. Système optique (40) pour des mesures selon la revendication 2, dans lequel le second élément de diffusion est une plaque de diffusion (C) disposée pour être partagée par la pluralité de systèmes optiques colorimétriques (13, 14, 15).

4. Système optique (40) pour des mesures selon l'une quelconque des revendications 1 à 3, dans lequel
le second élément de diffusion est une plaque de diffusion (13AC2, 14AC2, 15AC2) constituée par un substrat en verre courant (13AC1, 14AC1, 15AC1) dans lequel un côté de face d'incidence est rugosifié ; et
chacun de la pluralité de filtres d'interférence (13AC3, 14AC3, 15AC3) dans la pluralité de systèmes de mesure colorimétriques (13, 14, 15) est formé sur un côté de surface de sortie du substrat en verre courant.

5. Système optique (42) pour des mesures selon la revendication 1, dans lequel
le premier élément de diffusion est une plaque de diffusion (19), et le second élément de diffusion est une fibre optique unique (13F, 14F, 15F).

6. Système optique (43) pour des mesures selon l'une quelconque des revendications 2 à 5, dans lequel
le premier élément de diffusion (191) est une plaque de diffusion formée en une forme de dôme qui couvre le côté de second élément de diffusion.

7. Colorimètre de luminance (1) comprenant le système optique (40, 41, 42, 43) pour des mesures selon l'une quelconque des revendications 1 à 6.

8. Colorimètre (1) comprenant le système optique (40, 41, 42, 43) pour des mesures selon l'une quelconque des revendications 1 à 6.
